# EUROPEAN PATENT APPLICATION

(11) **EP 2 940 256 A1**
(43) Date of publication of application: **04.11.2015**
(21) Application number: 13869679.4
(22) Date of filing: 27.12.2013
(51) Int. Cl.: F01K 23/02, F02C 6/04, F02C 6/14, F02C 7/08, F02C 7/143, F03G 6/00

(54) **HYBRID PLANT WITH A COMBINED SOLAR-GAS CYCLE, AND OPERATING METHOD**

(30) Priority: 28.12.2012 ES 201201296
(71) Applicant: Abengoa Solar New Technologies, S.A., 41014 Sevilla (ES)
(72) Inventor: NUÑEZ BOOTELLO, Juan Pablo, E-41014 Sevilla (ES); OLAVARRÍA RODRÍGUEZ ARANGO, Rafael, E-41014 Sevilla (ES); MARTÍN DE OLIVA FERRARO, Francisco, E-41014 Sevilla (ES); MARTÍN SÁNCHEZ, Manuel, E-41014 Sevilla (ES); BARRAGÁN JIMÉNEZ, José, E-41014 Sevilla (ES); FERERES RAPOPORT, Sonia, E-41014 Sevilla (ES); KORZYNIETZ, Román, E-41014 Sevilla (ES); ESTEBAN GARMENDIA, Antonio, E-41014 Sevilla (ES)
(74) Representative: Garcia-Cabrerizo y del Santo, Pedro Maria
(86) International application number: PCT/ES2013/000280
(87) International publication number: WO 2014/102407

(57) **Abstract**

Hybrid plant with a combined solar-gas cycle and operating method with two circuits, one air circuit and one steam circuit, the air circuit having a gas turbine with an intercooler with a natural gas supply, and the steam circuit having a steam turbine and storage systems. The steam circuit can have steam or salt solar receiver. Said plant can work more reliably by reducing the working temperature of the air in the receiver.

## Description

### Field of the Invention

The present invention pertains to the field of solar technology. Specifically the sector of the hybrid solar plants that combine solar energy and natural gas.

### Background of the invention

Hybrid plants with a combined solar-gas cycle combine the benefits of solar energy with those of a combined cycle. While a conventional combined cycle plant is formed by a gas turbine, a heat exchanger and a steam turbine, in the case of a solar hybrid plant, solar energy is used as an auxiliary energy to increase the cycle efficiency and lower emissions.

The operation of a hybrid plant with a combined gas-solar cycle is similar to that of a conventional combined cycle plant. The operation of the gas cycle is similar in both technologies. The auxiliary energy supply from the solar field is performed in the Brayton cycle, so that the solar resource partially replaces the use of fossil fuel. Therefore, in this type of plant, the design and integration of the solar field in the conventional system is critical to the proper operation of the plant.

The prior art discloses various references to solar hybrid plants in which a Brayton cycle appears. An example of this is patent WO2008153946. In this document the plant comprises a Brayton cycle and a second Rankine cycle to generate electricity and whose working fluid is therefore steam. This patent further includes storing the first working fluid preheated by high concentration solar energy. The disadvantage of this plant is that to ensure a high solar share (SS) (defined as the ratio between the heat supplied by the solar field and the heat from burning natural gas, SS = QSolar / QNatural gas) receiver output temperatures of at least 800 ° C are required for operation. These conditions do not make the plant safe or reliable as they are very high working temperatures for the various components. Experience in relation to air receivers indicate that a receiver outlet temperature of 600°C enable safer plant operation. Air receivers such as SOLAIR-TSA also presented at this temperature the highest efficiency.

Another drawback of working with temperatures over 600 ° C is that because they are high power state of the art plants, the gas turbine must be installed at ground level, therefore, maintaining a higher temperature at receiver output (in order to increase the solar share) causes the down pipe to the gas turbine unit to have more heat loss and it suffers more heat stress.
Another example in the prior art is described in the doctoral thesis "Thermoeconomic analysis and optimisation of air-based bottoming cycles for water-free hybrid solar gas-turbine power plants" by Raphael Sandoz and published in 2012. This thesis reports a combined hybrid gas-gas cycle and the use of a cooling exchanger between a low and high pressure compressor and low prior to a recovery step after the second gas turbine. The use of said refrigerator reduces the work performed by the high pressure compressor and also increases the power of the gas turbine, increasing the density of inlet air due to the cooling of said stream and therefore, in hot seasons, it keeps the power ratings without overspending fuel. The plant of the doctoral thesis includes two gas turbines.

Another reference in the state of the art is patent WO2012042655. Herein described is a gas turbine system in which an additional pipe system is included for spraying water with the aim of decreasing the compressor inlet temperature. A similar concept to the cooling exchanger. The drawback of this cooling system is that the temperature drop is limited because water is being sprayed at room temperature, in addition to requiring a higher water supply than desired.
As for storage systems employed in the state of the art in solar thermal power plants, these either use storage in saturated water / pressurized steam or in molten salt.

Another type of storage which has not been implemented so far in solar plants, but has been in other applications, is the so-called "cool thermal energy storage" which is based on cooling a fluid by emitting radiation to the sky at night, which is called "nocturnal radiation". If sky temperature is defined as that of a black body with a power emission per area unit equal to that received by the Earth in the same area, this implies that this temperature is lower than room temperature, which means that overnight, a horizontal surface on Earth emits more radiation to the sky than it receives and therefore it cools. Thus, the use of the cold sky as a heat sink for radiating sources on the Earth surface is a cooling technique that can be used at night which, by using a thermal storage system (cool thermal energy storage or CTES) lowers the temperature of a fluid. Thus, low humidity areas such as deserts and high areas facing the sea level can generate large drops in temperature. Differences of up to 400 ° C were measured for quasi black bodies thermally insulated in the Atacama Desert in Chile (Eriksson and Granqvist). This known phenomenon, also known as "cold sky" effect will be applied to the plant of this invention.

Therefore, the present invention aims to provide a solar-gas hybrid plant which increases the solar share of hybrid plants with combined gas-solar cycle of the prior art, it operates with greater reliability and efficiency of the receiver, it reduces the cost plants and heat losses in transporting the first heat transfer fluid to the gas turbine and it prevents other problems encountered so far.

### Description of the invention

The invention consists in a hybrid plant with a combined solar-gas cycle comprising two cycles, the first has gas as working fluid (preferably air) and the second cycle has steam as working fluid and salt or water as heat transfer fluid.
The plant has among other elements: at least two solar receivers (one of them being gas, preferably air), at least one gas turbine with an intercooler, supply of natural gas, at least one steam turbine and storage systems.
Thanks to the configuration of the plant of the invention and to be described below, the operating conditions of the plant are modified with respect to the usual conditions of hybrid plants of the state of the art adjusted to a Brayton cycle. The purpose of the invention is to increase the solar share of hybrid plants with a combined gas-solar cycle of the state of the art working with natural gas without increasing the air outlet temperature of the receiver (target temperature), so that the new conditions provide the plant with reliability, these conditions being lower in operating temperature in the receiver than those usual in the Brayton cycles. Because of this increased solar share, the plant of our invention will be hereinafter called hybrid plant with a combined solar-gas cycle as compared to those solar-gas plants of the state of the art-.
If an output temperature of the first fluid (gas, preferably air) is lower in the receiver to that of the prior art, the temperatures reached therein are also lower, being able to use less demanding materials in terms of thermal fatigue, reducing the cost of the receiver, and consequently increasing plant reliability.

To achieve an increase of the solar share with a temperature in the receiver lower than that of the prior art, a cooling exchanger is used which decreases the receiver input temperature. The solar share desired to increase the temperature of the first fluid in the receiver from the input temperature to the output temperature (target temperature) is higher than in the conventional hybrid plants for the same target output temperature, as the temperature rise in the solar receiver increases, in this way, the solar share increases, as SS = QSolar / Q natural gas.
Prior to using the intercooler and in order to further decrease the inlet temperature of the first fluid to the receiver, in addition to said intercooler and optionally, cool storage can be used consisting of a cooling tank of the first cooling fluid from an intercooler with a third fluid. This third fluid, which may be water, is cooled due to the "cold sky" effect, whereby overnight a horizontal surface on Earth emits more radiation than it receives and cools. Said water, which has been cooled at night, during the day is at a temperature below room temperature and allows the reduction of the ambient temperature of the first fluid prior to the compressor with the intercooler of the gas turbine. The use of the intercooler with or without cold storage permit, a reduction of work performed by the compressor and the consequent increase of useful work in the gas turbine. Thanks to this, for the same fluid flow rate, the production of electricity is higher than in plants not including said intercooler with or without cool storage.
The second cycle, uses water or salt as heat transfer fluid and steam as working fluid. It has at least one steam turbine, which receives the steam either directly from at least a second steam receiver or from a heat exchanger, wherein the heat transfer fluid-water has been heated in the second receiver of the tower and this heat transfer fluid preferably being salts.
Besides the plant includes energy storage allowing it to work hours when there is no solar input as well as to improve receiver control during transients (passing clouds).
This storage may be in salt or saturated water / pressurized steam depending on the heat transfer fluid used in the second receiver. Thus, if the heat transfer fluid of the second receiver is molten salt, the system can have at least one salt storage tank, and preferably two tanks, a cold one and a hot one. In this case, the salt will be circulated from the hot tank to a salt-water exchanger where steam is generated, to later use this steam in the steam turbine for power generation; the cold salt that has passed its heat to the steam, goes to the cold tank and then is recirculated back to the receiver of the tower.

Thanks to the above system, the temperature of the first fluid at the receiver outlet, is lower than those of the state of the art and also allow, as this is similar to the outlet temperature of the fluid in the second receiver, both share the same downstream route from the tower, in order to share a single insulator and reduce costs.
This allows for greater simplicity of the system by reducing the number of insulators for separate downpipes, therefore reducing the plant costs and heat losses occurring in the plants of the state of the art which are obliged to carry air at high temperatures from the top of the tower to the ground where the turbine is located.
Additionally and optionally, the first cycle of the plant can be a closed Bryton cycle, wherein the fluid from the gas turbine is recirculated after leaving the heat recovery unit to go to the compressor.
For hours during the day when there is no solar radiation or receiver maintenance periods, the gas turbine fluid is circulated from the high pressure compressor directly to the combustion chamber of the gas turbine. In this case the plant configuration allows the first fluid not to flow through the solar receiver and the plant can operate 24 hours a day.
Thus, the working method of the plant is as described below.
The first cycle, whose working fluid is gas, comprises the following steps:
- The gas is introduced into a low pressure compressor,
- At the outlet of the compressor the gas is passed through an intercooler,
- Subsequently it is introduced into a high pressure compressor,
- Optionally passed through a solar receiver in order to increase the temperature, (if there is sun and the receiver is functioning properly, if not it passes directly to the combustion chamber of natural gas)
- Then it is conducted to the combustion chamber,
- To then go through a gas turbine to generate electricity.
The second cycle wherein the working fluid is steam and if the heat transfer fluid is water it comprises the following steps:
- Heating the heat transfer fluid (water) in a solar receiver,
- Expansion of the working fluid (steam) in a steam turbine to generate electricity,
- The steam from the steam turbine is passed through a condenser for reuse.
If the second cycle salts uses salts instead of water as heat transfer fluid, the steps of the second cycle are:
- Heating the heat transfer fluid (salts) in a salt receiver,
- These salts are passed to a salt / water exchanger in order to generate steam,
- After the salt/water exchanger, salts are passed to the receiver and the salt cycle starts again and the steam leaving the exchanger is expanded in a steam turbine, generating electricity,
- The steam from the steam turbine is passed through a condenser for reuse.
In order to store heat for later use in periods when no solar input is available, the salt cycle is:
- The salts, after leaving the receiver are stored in at least one hot tank and from the hot tank they go to salt / water exchanger,
- And after the salt/ water exchanger, the salts pass to at least one cold tank where they are stored until there is solar input once again and they pass through the receiver starting the salt cycle.
The plant configuration described allows, to increase the solar share of hybrid plants with combined gas-solar cycle of the prior art, to operate with greater receiver reliability and efficiency, to decrease the cost of the plant and the thermal and pressure losses due to the transport of the first heat transfer fluid to the gas turbine. All this results in increased production and reduced heat input necessary both solar and natural gas. The proposed plant configuration has a certain flexibility in the hybridization, and can be applied to both to plants having a small natural gas supply (gas turbines in the range of MWe) and plants with turbines in the range of tens of MWe.

### Description of the drawings

To complete the description being made and in order to aid a better understanding of the invention, a set of drawings is attached which by way of illustration and without limiting the scope of this invention, show the following:
- Figure 1: Hybrid Solar plant with two receivers, an intercooler and storage in saturated water / pressurized steam.
- Figure 2: Hybrid Solar plant with two receivers, an intercooler and storage in salts.
- Figure 3: Fluid up-pipes and downpipes.

Figure references correspond to the following elements:
1. Low pressure Compressor.
2. Intercooler.
3. High pressure Compressor.
4. Gas turbine.
5. Combustion chamber.
6. Electricity generator.
7. Steam turbine.
9. Storage Tank of saturated water / pressurized steam.
10. Heat recovery unit.
11. Air Receiver.
12. Steam Receiver.
13. Cold storage tank.
14. Condenser.
15. Hot storage tank of molten salt.
16. Cold salt tank.
17. Salt Receiver.
18. Salts / water exchanger.
19. Salts or steam pipeline.
20. Gas (preferably air) pipeline.
21. Common insulating for air and steam pipes

### Preferred embodiment of the invention

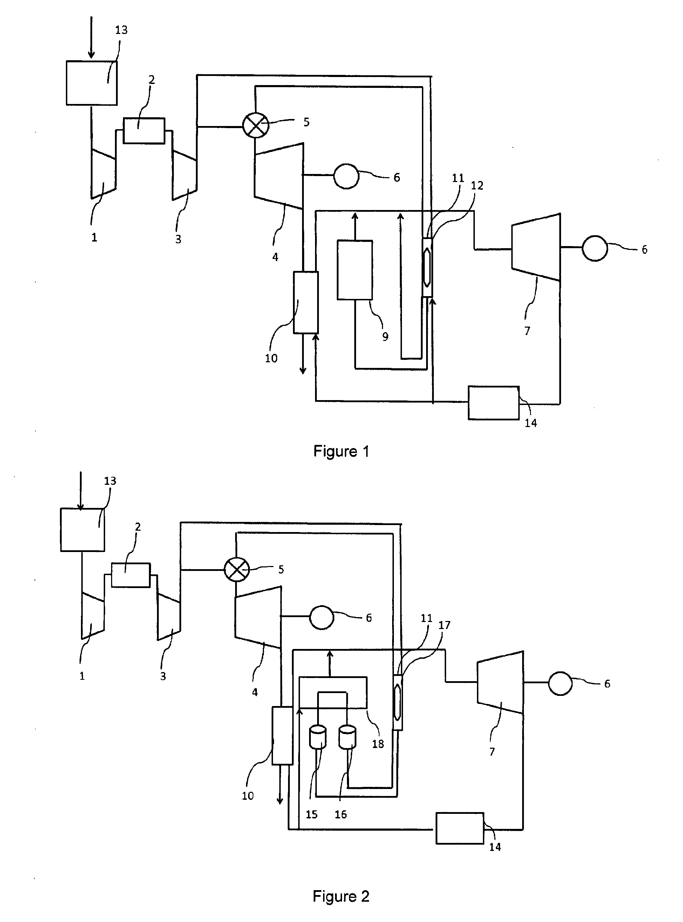

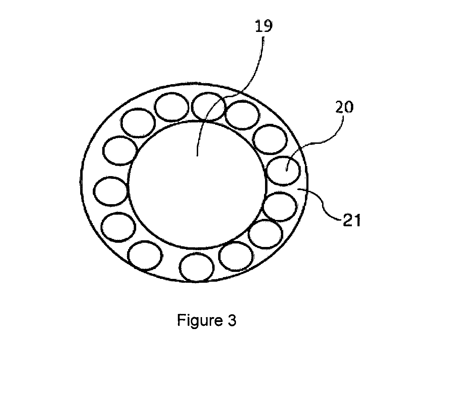

For a greater understanding of the invention, described below are two preferred embodiments of the invention illustrated in Figures 1 and 2. In Figure 1, in the first cycle, the air coming from the cold storage tank (13) enters the low pressure compressor (1), at about 20 °C. At the outlet of this compressor, in order to lower the temperature (to increase the solar share without increasing the air temperature at the receiver outlet to 800 °C), the air is passed through an intercooler (2) for subsequent incorporation into a high pressure compressor (3). This compressed air, which is at 250 °C is passed through a solar air receiver (11) with the aim of increasing the temperature to 600 °C. At the outlet it goes through a down pipe (20) (Figure 3) to the combustion chamber (5). There the air reaches 1400 °C and later goes through a gas turbine (4) and generates electricity (6).

Another option offered by the plant in this first cycle is to directly direct air from the high pressure compressor (3) to the combustion chamber (5) and to the gas turbine (4) bypassing the air receiver (11), in order to avoid having to stop operation of the plant in sunless periods, at night or in the case for example of maintenance of said receiver (11).
Figure 1 shows a second cycle, which has water as heat carrying fluid and steam as the working fluid, generated in a steam solar receiver (12) is observed. Part of the steam expands in the steam turbine (7) generating electricity (6) and part is stored in a saturated water / pressurized steam tank (9) to be used in the hours without available solar input.

The displacement of the steam to the turbine is done through a pipe (19) (Figure 3) surrounded by a set of air pipes (20) so that both may share a common insulator (21). The steam from the steam turbine (7) is passed through a condenser (14), part of the condensed liquid is recirculated to the steam receiver (12) to restart the cycle and the other remaining portion is passed through a heat recovery unit (10) that uses the heat from the gases released in the gas turbine (4) and which generates heat which is incorporated into the steam heated in the receiver (12) to continue the cycle.
In Figure 2, the first cycle remains the same, i.e., the air from the cold storage tank (13) enters the low pressure compressor (1) at approximately 20 °C. At the outlet of this compressor in order to cool down, the air is passed through an intercooler (2) to subsequently introduce it at 250 ° C in a high pressure compressor (3). This compressed air is passed through an air receiver (11) with the aim of increasing the temperature to 600 °C, at the outlet it goes through a down pipe (20, figure 3) to the combustion chamber (5). There the air reaches 1400 °C and later goes through a gas turbine (4) and generates electricity (6).
In Figure 2, unlike Figure 1, in the second cycle, salts are used as heat transfer fluid while the working fluid is still steam. Steam is generated in a salt / water exchanger
(18). The steam is subsequently introduced into a turbine (7) to generate electricity (6). The steam coming out of the turbine is passed through a condenser (14), part of the condensed liquid is recirculated to the salt / water exchanger (18) to generate steam and start the cycle again and the remaining portion is passed through a heat recovery unit (10) that uses the heat of the gases released in the gas turbine (4) and which generates steam which is incorporated into the steam generated in the salt / water exchanger (18) to continue the cycle.
In this cycle the molten salts are heated in a salt receiver (17). These salts are stored in a hot tank (15) to be used in the hours without solar input to make them pass through a salt / water exchanger (18) to generate steam. After the salt / water exchanger (18), the salt passes to a cold tank (16), where it is stored until it is passed again through the receiver (17) and restarts the salt cycle. The displacement of molten salt from the receiver (17) to the hot storage tank (15) is performed through a pipeline (19, Figure 3) surrounded by a set of air pipes (20) so that both can share the same insulation (21).
This system is specially designed for use in solar energy capture structures, but its extension to other industrial fields requiring similar characteristics should not be discarded.

## Claims

1. Hybrid plant with a combined solar-gas cycle, **characterized in that** it consists of two cycles: a first cycle in which the working fluid is gas comprising a low pressure compressor (1) connected to an intercooler (2), which has its outlet connected to a high pressure compressor (3) which is directly connected to at least one solar gas receiver (11) and a combustion chamber (5), the receiver outlet (11) to the combustion chamber (5) and the outlet of the combustion chamber (5) connected to at least one gas turbine (4), which connects to an electricity generator (6) and a second cycle with a heat transfer fluid for steam generation as the working fluid, comprising at least one solar receiver (12 or 17) and a steam turbine (7), the plant having at least one storage tank.

2. Hybrid plant with a combined solar-gas cycle according to claim 1, **characterized in that** in the second cycle the heat transfer fluid is water and the solar receiver is steam (12), the receiver outlet (12) being connected to a steam turbine (7) and the outlet of said turbine (7) on the one hand to a generator (6) and secondly to a condenser (14), said condenser outlet being connected to a heat recovery unit (10).

3. Hybrid plant with a combined solar-gas cycle according to claim 1, **characterized in that** in the second cycle the heat transfer fluid is salt, and the solar receiver is salt (17) and connected to salt / water exchanger (18), connected in turn with at least one hot tank (15) for salt storage and with at least one cold tank (16) for salt storage.

4. Hybrid plant with a combined solar-gas cycle according to claim 1, **characterized in that** the downstream and upstream movement of fluid is done through a pipe (19) surrounded by a gas line assembly (20) so that both share a common insulator (21).

5. Hybrid plant with a combined solar-gas cycle according to claim 1, **characterized in that** it includes a cold storage tank (13) whose outlet is connected to the inlet of low pressure compressor (1), said tank (13) consists of a cooling tank for the gas from an exchanger with another fluid (may be cold water).

6. Hybrid plant with a combined solar-gas cycle according to preceding claims, **characterized in that** the gas of the first cycle is air and the storage is performed in a tank of saturated water / pressurized steam.

7. Operating method for the hybrid plant with a combined solar-gas cycle described in the preceding claims **characterized in that** it has two operating cycles, wherein the first cycle has a gas as the working fluid and comprises the following steps:
- The gas is introduced into the low pressure compressor (1),
- At the outlet of this compressor (1) the gas is passed through an intercooler (2)
- Subsequently it is introduced into a high pressure compressor (3),
- Then it is conducted to the combustion chamber (5),
- Then it passes through a gas turbine (4) and generates electricity (6);
the second cycle wherein the working fluid is steam and comprising the essential steps of:
- Heating a heat transfer fluid in a solar receiver (12 or 17) for the subsequent generation of the working fluid (steam)
- Steam expansion in the turbine (7) generating electricity (6),
- The steam coming from the steam turbine (7) is passed through a condenser (14) for reuse.

8. Operating method for the hybrid plant with a combined solar-gas cycle according to claim 7 **characterized in that** the compressed gas from the high pressure compressor (3) is passed through a solar receiver (11) with the aim of increasing the temperature, before introduction into the combustion chamber (5).

9. Operating method for the hybrid plant with a combined solar-gas cycle in accordance with claims 7 or 8 **characterized in that** the fluid from the gas turbine (4) is recirculated to a heat recovery unit (10) to the low pressure compressor (1).

10. Operating method for the hybrid plant with a combined solar-gas cycle according to claims 7 or 8 **characterized in that** part of the water leaving the condenser (14) is passed through a heat recovery unit (10) which uses the heat of gases released in the gas turbine (4) and it generates steam which is incorporated into the heated steam to continue the cycle.

11. Operating method for the hybrid plant with a combined solar-gas cycle according to claims 7 or 8 **characterized in that** in the second cycle the heat transfer fluid is water and the solar receiver is steam (12).

12. Operating method for the hybrid plant with a combined solar-gas cycle according to claims 7 or 8 **characterized in that** in the second cycle of the solar receiver is salt and after the step of heating the heat transfer fluid (salts) in a solar receiver (17) these salts are passed to a salt / water exchanger (18) where steam is generated and the salts then pass to the receiver (17) and the salt cycle restarts.

13. Operating method for the hybrid plant with a combined solar-gas cycle according to claims 7 or 8 **characterized in that** in the second cycle of the solar receiver is salt and after the step of heating the heat transfer fluid (salts) in a solar receiver (17):
- These salts are stored in at least one hot tank (15) and from the hot tank (15) they go to salt / water heat exchanger (18) where steam is generated,
- And after the salt/ water exchanger (18), salts are passed to at least one cold tank (16), where it is stored until the solar input returns and it is passed through the receiver (17) starting the salt cycle.

14. Operating method for the hybrid plant with a combined solar-gas cycle according to claims 12 or 13 **characterized in that** the water leaving the condenser (14) partly flows to a salt / water exchanger (18) for generating steam and partly to a heat recovery unit (10).

15. Operating method for the hybrid plant with a combined solar-gas cycle according to claims 7 or 8 **characterized in that** the gas exiting the solar receiver (11) is at the same temperature as the steam or salts leaving the solar receiver (12 or 17).

16. Operating method for the hybrid plant with a combined solar-gas cycle according to preceding claims **characterized in that** the gas is air.

17. Operating method for the hybrid plant with a combined solar-gas cycle according to claim 16 **characterized in that:**
- The air is introduced into the low pressure compressor (1) at about 20 ° C,
- The air coming out of the high pressure compressor (3) is at 250 ° C and is passed through a solar air receiver (11) increasing the temperature to 600 ° C,
- And in the combustion chamber (5) the air reaches 1400°C.
